# EUROPEAN PATENT APPLICATION

(11) **EP 3 960 387 A1**
(43) Date of publication of application: **02.03.2022**
(21) Application number: 19917530.8
(22) Date of filing: 29.04.2019
(51) Int. Cl.: B25F 5/02, B25F 5/00

(54) **WATERPROOF HOUSING FOR EXCHANGEABLE BATTERY TYPE HYDRAULIC EQUIPMENT**

(30) Priority: 23.04.2019 KR 20190047586
(71) Applicant: SUNG, Won, Chungcheongbuk-do 28152 (KR)
(72) Inventor: SUNG, Won, Chungcheongbuk-do 28152 (KR)
(74) Representative: ABG Intellectual Property Law, S.L.
(86) International application number: PCT/KR2019/005134
(87) International publication number: WO 2020/218658

(57) **Abstract**

The present disclosure relates to a waterproof housing of a battery-replaceable hydraulic device, and more particularly, a waterproof housing of a battery-replaceable hydraulic device for providing an improved watertight structure so that a hydraulic device operated by a detachable battery can be used underwater or in rain.

## Description

### [Technical Field]

The present disclosure relates to a waterproof housing of a battery-replaceable hydraulic device, and more particularly, a waterproof housing of a battery-replaceable hydraulic device for providing an improved watertight structure so that a hydraulic device operated by a detachable battery can be used underwater or in rain.

### [Background Art]

In general, an instrument which is used to make a machine or a mechanical device is called as a tool. The tool is used in various fields and includes a machine tool such as a high-speed steel tool, a carbide tool, a grinding tool, or a diamond tool used for machine production and assembly in a machinery industry, a wood tool, a measurement tool, a forging tool, a machine tool auxiliary tool, a power tool, an air tool, a pneumatic/hydraulic tool.

Among the various tools as described above, the power tool is a tool which accommodates a small electric motor and processes metal or wood using a rotational force of the electric motor. In addition, drilling, screwing, and grinding are performed by attaching various replaceable parts to an end of a rotating shaft.

A general power tool uses a rotating force of an electric motor as it is for work, while a hydraulic power tool, that is, an electric hydraulic tool, is used when performing cutting, crimping, bending, punching, or riveting which requires a large force.

Recently, the electric hydraulic tool is mainly used for firefighting (or rescue), and an electric hydraulic tool in the form of a detachable battery is widely used for quick and convenient equipment insertion into a field.

A typical configuration of the electric hydraulic tool includes a battery, an electric motor, a controller, a hydraulic generator (pump assembly and valves), a cylinder, and a tool head equipped with a processing tool. Depending on a processing method, there are various types of processing tools such as a cutter, a deployer, a drill, and a punch, a tool head equipped with the processing tool is configured to be interchangeable from the cylinder, and in this case, a tool head connector for detachably coupling the tool head and the cylinder may be provided.

In a method of operating the electric hydraulic tools, the electric motor is rotated by receiving electric power from a power source of the battery, and a high-pressure fluid flows into the cylinder by operating the hydraulic generator with the rotating force of the electric motor. In this case, as a piston installed in the cylinder so as to move forward and backward moves forward, the processing tool of the tool head is operated to perform a desired processing operation.

However, such an electric hydraulic tool has a problem that is vulnerable to water due to its electrical characteristics, and especially, it is difficult to use the electric hydraulic tool in rain or underwater.

In addition, when a working time is prolonged, the battery must be replaced by moving the battery to a place without water in order to replace the battery. Therefore, a considerable problem occurs in a rescue site where time is important.

### [Disclosure]

### [Technical Problem]

The present disclosure solves the above-described problems, and an object of the present disclosure is to provide a waterproof housing of a battery-replaceable hydraulic device in which the hydraulic device is accommodated inside an upper housing and a lower housing to which a packing portion is fastened so that the hydraulic device can be safely operated underwater or in rain, and thus, an improved watertight structure is provided.

Moreover, another object of the present disclosure is to provide a waterproof housing of a battery-replaceable hydraulic device in which a packing portion including a main packing member and a ring-shaped packing member of the hydraulic device are integrally formed with each other, and the ring-shaped packing member having a relatively large cross-sectional area is provided so that airtightness is prevented from decreasing due to vibrations or the like generated when the hydraulic device is operated.

In addition, still another object of the present disclosure is to provide a waterproof housing of a battery-replaceable hydraulic device in which a hatch portion is provided in an upper housing so that the battery of the hydraulic device can be easily replaced, and thus, the hydraulic device can be operated for a long time, and the battery can be replaced even underwater or in rain.

The problems to be solved by the present disclosure are not limited to the problems mentioned above, and other problems which are not mentioned will be clearly understood by a person skilled in the art from the following description.

### [Technical Solution]

In order to solve the above-described problems, according to an aspect of the present invention, there is provided a waterproof housing of a battery-replaceable hydraulic device coupled to an outside of a hydraulic device 20 to which a battery 10 is detachable, the waterproof housing including: a lower housing 100 which is formed to correspond to a lower-side outer shape of the hydraulic device and includes a plurality of lower fastening holes 110 formed along an outer periphery on an outer peripheral surface and a lower hole 120 formed on a front surface so that a tool member of the hydraulic device is seat on a lower portion; an upper housing 200 which includes upper fastening holes 210 corresponding to the lower fastening holes of the lower housing to be coupled to the lower housing and an upper hole 220 formed on a front surface so that an upper portion of the tool member is seated; and a packing portion 300 in which a main packing member 310 coupled to a lower recessed portion 130 and an upper recessed portion 230 formed on contact surfaces of the lower housing and the upper housing and a ring-shaped packing member 320 coupled to the lower hole and the upper hole are integrally formed with each other so as to control water-tightness inside the waterproof housing.

In this case, the packing portion may be formed of a silicone rubber material.

Moreover, in the packing portion, a cross-sectional area of the ring-shaped packing member may be one to two times a cross-sectional area of the main packing member.

In addition, the packing portion may be formed so that cross sections of the main packing member and the ring-shaped packing member increase outward from an inside.

Further, the upper housing may further include a hatch portion 240 formed in an upper portion so that the battery of the hydraulic device is replaceable, and the hatch portion may include a protrusion frame 241 which protrudes upward from the upper housing and includes a hollow, a cover 242 which is coupled to an upper portion of the protrusion frame and is openable or closable, and an auxiliary packing member 244 which is fastened to an auxiliary recessed portion 243 formed on contact surfaces of the protrusion frame and the cover.

Moreover, the upper housing may further include a hatch portion 240 formed in an upper portion so that the battery of the hydraulic device is replaceable, and the hatch portion may include a connector portion 245 which is formed on an inner upper surface of the upper housing, is electrically connected to the hydraulic device accommodated inside the housing, and is formed to be exposed to an upper surface of the upper housing, a waterproof cover 247 which includes a power terminal 246 corresponding to the connector portion and accommodates the battery inside the waterproof cover, and a coupler 248 which is formed on one side of the upper surface of the upper housing so that the waterproof cover is fixed.

In this case, the waterproof cover may include an upper cover member 247-1 and a lower cover member 274-2 formed to surround the outside of the battery, and may further include a waterproof packing member 247-3 coupled between the upper cover member and the lower cover member.

Further, the upper cover member may further include a viewing window to observe a battery therein.

Meanwhile, the lower housing and the upper housing may include a gear member 400 for interlocking with an operating member of the hydraulic device therein, the gear member may include a first gear 410 which is connected to an operating unit 21 of the hydraulic device, a second gear 420 which engages with the first gear to transmit a rotating force, and a rotating shaft 430 which is formed at a center of the second gear, and the lower housing may include a through hole 140 through which the rotating shaft passes at one side of a rear surface to protrude outward and a handle 150 which is fastened to an end portion of the rotating shaft.

### [Advantageous Effects]

In this way, according to the present disclosure, the hydraulic device can be accommodated inside the upper housing and the lower housing to which the packing portion is fastened so that the hydraulic device can be safely operated underwater or in rain, and thus, an improved watertight structure is provided.

Moreover, according to the present disclosure, the packing portion including a main packing member and a ring-shaped packing member of the hydraulic device are integrally formed with each other, and the ring-shaped packing member having a relatively large cross-sectional area is provided so that airtightness is prevented from decreasing due to vibrations or the like generated when the hydraulic device is operated.

In addition, according to the present disclosure, the hatch portion is provided in the upper housing so that the battery of the hydraulic device can be easily replaced, and thus, the hydraulic device can be operated for a long time, and the battery can be replaced even underwater or in rain.

Effects of the present disclosure are not limited to the effects mentioned above, and other effects which are not mentioned will be clearly understood by a person skilled in the art from the following description.

### [Description of Drawings]

FIGS. 1 and 2 are views illustrating a hydraulic device of the related art.
FIG. 3 is an exploded perspective view of a waterproof housing of a battery-replaceable hydraulic device according to a preferred embodiment of the present disclosure.
FIG. 4 is a view illustrating a packing portion according to a preferred embodiment of the present disclosure.
FIG. 5A is a cross-sectional view taken along line A-A' of FIG. 4.
FIG. 5B is a cross-sectional view taken along line B-B' of FIG. 4.
FIG. 6 is a schematic cross-sectional side view of an upper housing according to a preferred embodiment of the present disclosure.
FIG. 7 is a schematic cross-sectional side view of an upper housing according to another preferred embodiment of the present disclosure.
FIG. 8 is a schematic cross-sectional side view of an upper housing according to still another preferred embodiment of the present disclosure.
FIG. 9 is a view illustrating a gear member according to a preferred embodiment of the present disclosure.

### [Mode for Disclosure]

The present invention may have various modifications and embodiments, and specific embodiments will be described in detail with reference to the drawings.

However, this is not intended to limit the present invention to the specific embodiments, and it is to be understood as including all modifications, equivalents, or substitutes included in the spirit and scope of the present invention. In describing each drawing, similar reference numerals have been used for similar elements.

When a component is referred to as being "coupled" or "connected" to other components, it is understood that the component may be directly coupled or connected to other components, but a component may exist between the component and other components. On the other hand, when a component is referred to as being "directly coupled" or "directly connected" to other components, it should be understood that there is no other component therebetween.

A terminology used in the present application is used to describe a specific embodiment, and is not intended to limit the present disclosure. As used herein, a singular form may include a plural form unless the context clearly indicates otherwise. Moreover, in the present application, terms such as "comprise" or "have" are intended to designate the presence of features, numbers, steps, actions, components, parts, or combinations thereof described in the specification. That is, it is to be understood that the presence or addition of one or more other features, numbers, steps, actions, components, parts, or combinations thereof is not precluded in advance.

Hereinafter, preferred embodiments of the present invention will be described in more detail with reference to the accompanying drawings. The same reference numerals are used for the same elements in the drawings, and duplicate descriptions for the same elements are omitted.

Embodiments of the present invention will be described with reference to the accompanying drawings. The same reference numerals in each drawing indicate the same member. In describing the present invention, detailed descriptions of related known functions or configurations will be omitted so as not to obscure a subject matter of the present invention.

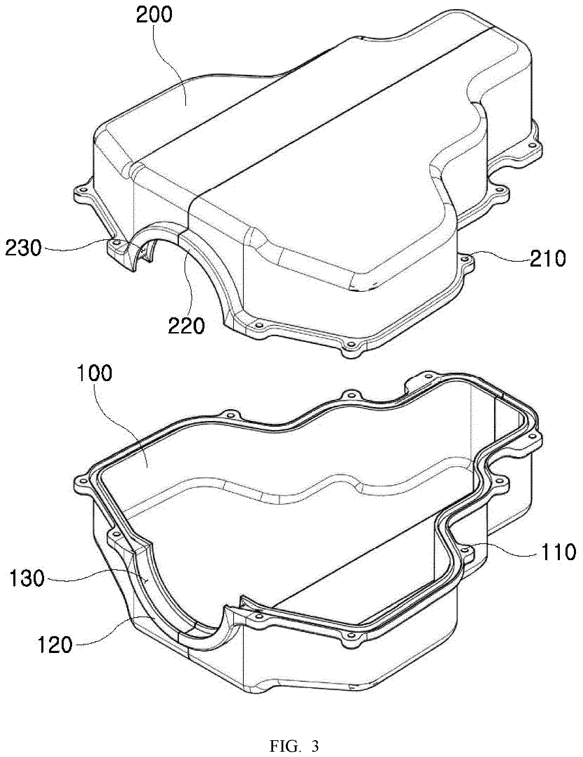

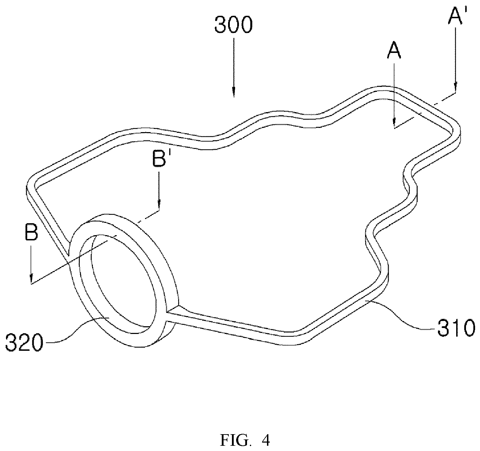

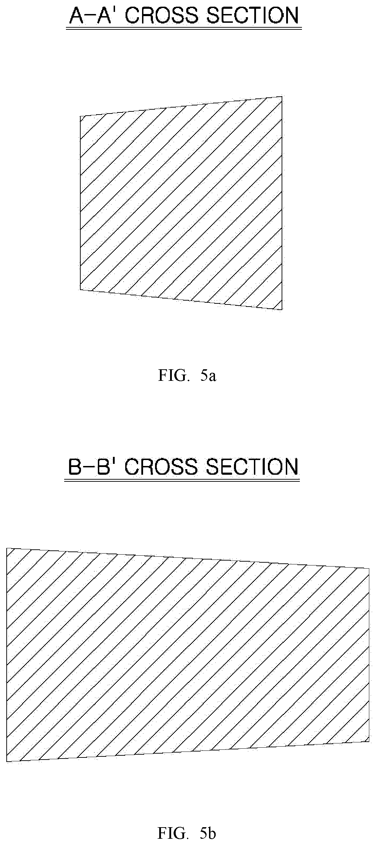

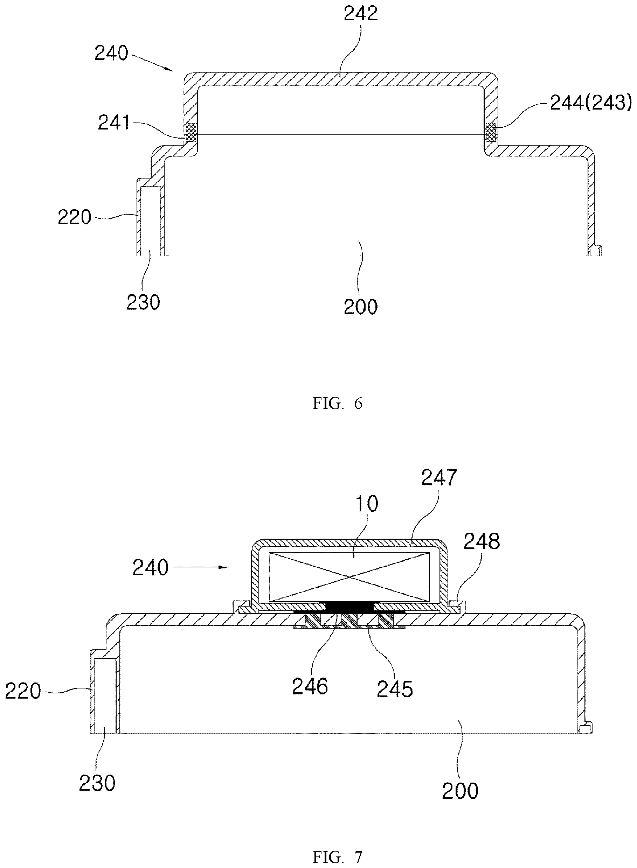

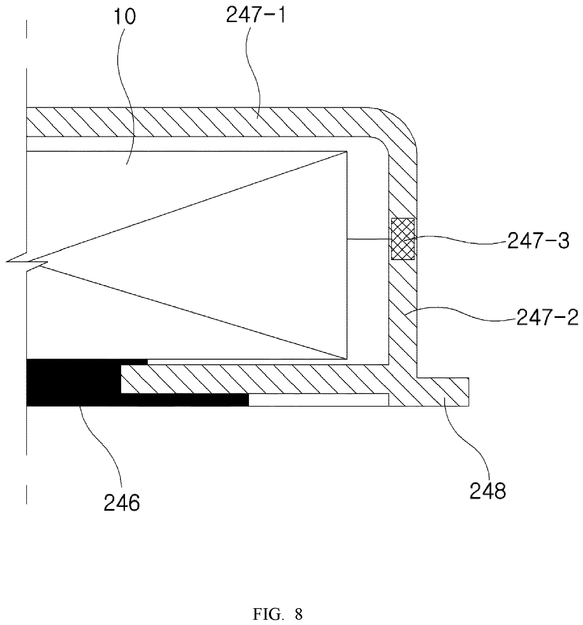

FIGS. 1 and 2 are views illustrating a hydraulic device of the related art, FIG. 3 is an exploded perspective view of a waterproof housing of a battery-replaceable hydraulic device according to a preferred embodiment of the present disclosure, FIG. 4 is a view illustrating a packing portion according to a preferred embodiment of the present disclosure, FIG. 5A is a cross-sectional view taken along line A-A' of FIG. 4, FIG. 5B is a cross-sectional view taken along line B-B' of FIG. 4, FIG. 6 is a schematic cross-sectional side view of an upper housing according to a preferred embodiment of the present disclosure, FIG. 7 is a schematic cross-sectional side view of an upper housing according to another preferred embodiment of the present disclosure, FIG. 8 is a schematic cross-sectional side view of an upper housing according to still another preferred embodiment of the present disclosure, and FIG. 9 is a view illustrating a gear member according to a preferred embodiment of the present disclosure.

As illustrated in FIGS. 3 to 9, the waterproof housing of the battery-replaceable hydraulic device according to the present disclosure mainly includes a lower housing 100, an upper housing 200, and a packing portion 300.

Accordingly, as illustrated in FIG. 3, the lower housing is formed to correspond to a lower-side outer shape of the hydraulic, a plurality of lower fastening holes 110 are provided on an outer peripheral surface of the lower housing along an outer periphery, and a lower hole 120 is formed on a front surface of the lower housing so that a tool member of the hydraulic device is seated on a lower portion of the lower housing.

In this case, the lower housing may be formed of a lightweight metal or synthetic resin material, and preferably, may be formed of a reinforced plastic material.

Moreover, the lower housing is formed to correspond to the external shape of the hydraulic device of the related art described above, and is not limited to the shape illustrated in the drawings of the present specification.

In addition, the fastening holes are formed to promote airtight fastening with the upper housing described later, and preferably, the plurality of fastening holes may be formed according to the shapes of the lower housing and the upper housing, and the lower housing and the upper housing are fastened using a separate coupling member (not illustrated).

In addition, the lower hole is for allowing various processing tools coupled to a front portion of the hydraulic device to be exposed to an outside, and is formed to correspond to an external shape of the processing tool.

Meanwhile, the upper housing includes upper fastening holes 210 corresponding to the lower fastening holes of the lower housing, is formed to be coupled to the lower housing, and includes an upper hole 220 formed on a front surface of the upper housing so that the upper portion of the tool member is seated.

In this case, the upper housing may be formed of the same material as that of the lower housing, and the upper fastening hole and the upper hole are preferably formed to correspond to the lower fastening hole and the lower hole of the lower housing described above.

Meanwhile, as illustrated in FIGS. 4 and 5, in the packing portion, a main packing member 310 coupled to a lower recessed portion 130 and an upper recessed portion 230 formed on contact surfaces of the lower housing and the upper housing and a ring-shaped packing member 320 coupled to the lower hole and the upper hole are integrally formed with each other so as to control water-tightness inside the waterproof housing.

In this case, the packing portion is formed of a silicone rubber material, and characteristics of the silicone rubber material are as follows.

### Heat resistance

Silicone rubber (coupling energy: 108 Kcal/mol) has excellent heat resistance compared to organic rubber (coupling energy: 83 kcal/mol). Accordingly, the silicon rubber has stable mechanical, electrical, and chemical properties even at a high temperature, can be used continuously used. In general, the silicon rubber can be continuously used (15,000 Hrs) at 150°C to 250°C, and in special cases, special grade silicon rubber can be used even at 300°C.

### Cold resistance

The silicone rubber is amorphous and has less temperature dependence. Accordingly, the silicon rubber has excellent cold resistance compared to all kinds of rubber (a saturation point of the organic rubber : -20°C to -40°C and a saturation point of the silicon rubber is -40°C to -70°C), and in particular, the silicone rubber (PVMQ) including a phenyl group can be used at ultra-low temperatures up to -115°C.

### Non-toxic (colorless, odorless)

The silicone rubber is essentially non-toxic and physiologically inert. Accordingly, the silicone rubber is suitable for manufacturing food containers and medical supplies, and can be widely applied in these fields.

### Chemical resistance

The silicone rubber may be infringed upon strong acids or strong alkalis. However, the silicone rubber is excellent resistance for general acids, bases, inorganic chemical alcohol such as salt, and polar organic compounds such as animal and vegetable oils.

### Heat water resistance

Properties of the silicone rubber are hardly changed even when the silicone rubber is deposited in water for a long time or when the silicone rubber is in contact with steam.

### Insulating properties

The silicone rubber is widely used as an insulating material due to a unique chemical structure thereof and a low carbon ratio in the molecule, and even when the silicone rubber is burnt, silica which is an insulating material remains, and the silicone rubber can be used as an insulator even under severe conditions.

As describe above, the silicon rubber material has excellent heat resistance, cold resistance, weather resistance, ozone resistance, oil resistance, chemical resistance, water resistance, and electrical properties.

In particular, in terms of the heat resistance and cold resistance, the silicone rubber material can maintain excellent rubber elasticity between -60°C to 300°C, and the silicone rubber material has characteristics suitable for various working environments of a hydraulic device mainly used for fire-fighting.

In addition, the silicone rubber material has excellent extrusion processability and has good manufacturing properties. Accordingly, the silicone rubber material has superior physical properties compared to other synthetic rubbers (butyl rubber, chloroprene rubber, or the like).

Meanwhile, in the packing portion, a cross-sectional area of the ring-shaped packing member is one to two times a cross-sectional area of the main packing member.

That is, the ring-shaped packaging member is a member which is seated on the lower hole and the upper hole in which a processing tool of the hydraulic device is located. Accordingly, when the hydraulic device is driven, vibrations or an external force may be largely applied to the ring-shaped packing member compared to the main packing member.

Accordingly, the cross-sectional area of the ring-shaped packing member is relatively large, and thus, a gap between the ring-shaped packing member and the lower recessed portion and the upper recessed portion is not generated by the vibrations or external force, and external water does not flow into the gap.

Moreover, as illustrated in FIGS. 5A and 5B, the packing portion may be formed so that cross sections of the main packing member and the ring-shaped packing member increase outward from an inside.

That is, the lower fastening holes and the upper fastening holes for fastening the lower housing and the upper housing should be located on an outer side of the housing. Accordingly, when the housing is fastened, a large pressing force is applied to the outer side compared to an inner side.

Therefore, a thickness on the outer side of the packing portion is set to be larger than that on the inner side thereof, and thus, the packing portion can come into close contact with an inner peripheral surface of the recessed portion by the pressing force and an elastic force of the packing portion generated when the housing is fastened.

Meanwhile, as illustrated in FIG. 6, the upper housing further includes a hatch portion 240 formed in an upper portion so that the battery of the hydraulic device is replaceable, and the hatch portion includes a protrusion frame 241 which protrudes upward from the upper housing and includes a hollow, a cover 242 which is coupled to an upper portion of the protrusion frame and is openable or closable, and an auxiliary packing member 244 which is fastened to an auxiliary recessed portion 243 formed on contact surfaces of the protrusion frame and the cover.

In this case, preferably, the cover includes a viewing window formed on one side of the outer peripheral surface, and thus, it is possible to conform a remaining amount of the battery of the hydraulic device accommodated therein.

Moreover, in the cover, a method for fastening the housing such as using the above-described lower fastening holes and the upper fastening holes is adopted. However, preferably, in order to rapidly replace the battery, the cover may be opened or closed using a clamping-type fastening member (not illustrated).

In this case, preferably, the auxiliary packing member may be formed of the same material as that of the above-described packing portion.

The batteries are diverse and incompatible with each other according to manufacturers due to the characteristics of the hydraulic devices in the related art. In this case, the hatch portion can be applied to the hydraulic devices which cannot use standardized batteries.

Meanwhile, as illustrated in FIG. 7, the upper housing further includes a hatch portion 240 formed in an upper portion so that the battery of the hydraulic device is replaceable, and the hatch portion includes a connector portion 245 which is formed on an inner upper surface of the upper housing, is electrically connected to the hydraulic device accommodated inside the housing, and is formed to be exposed to an upper surface of the upper housing, a waterproof cover 247 which includes a power terminal 246 corresponding to the connector portion and accommodates the battery inside the waterproof cover, and a coupler 248 which is formed on one side of the upper surface of the upper housing so that the waterproof cover is fixed.

Here, the connector portion and the power terminal can be driven underwater and are already well known in the related technology, and thus, detailed descriptions thereof will be omitted.

In this case, as illustrated in FIG. 8, the waterproof cover includes an upper cover member 247-1 and a lower cover member 274-2 formed to surround the outside of the battery, and may further include a waterproof packing member 247-3 coupled between the upper cover member and the lower cover member.

Moreover, preferably, the waterproof packing member may be formed of the same material as that of the above-described packing portion and may be formed so that a cross section thereof increases outward.

Moreover, as still another embodiment, in the waterproof cover, an extension line (not illustrated) electrically connected to the power terminal may be formed to be connected to the connector.

For example, in a deep underwater work environment, the connector and power terminal may be relatively vulnerable to water pressure. Accordingly, power can be supplied to the connector and power terminal from the battery using the extension line.

That is, the hatch portion can be applied to the hydraulic device which can use a standardized battery, and the battery can be rapidly replaced even if the battery is discharged during the operation.

Meanwhile, as illustrated in FIG. 9, the lower housing and the upper housing include a gear member 400 for interlocking with an operating member of the hydraulic device therein, the gear member includes a first gear 410 which is connected to an operating unit 21 of the hydraulic device, a second gear 420 which engages with the first gear to transmit a rotating force, and a rotating shaft 420 which is formed at a center of the second gear, and the lower housing includes a through hole 140 through which the rotating shaft passes at one side of a rear surface to protrude outward and a handle 150 which is fastened to an end portion of the rotating shaft.

That is, the existing hydraulic device has a certain standard for the processing tool, but the operating unit is provided in various forms because the standard is not specified separately. Accordingly, it is very difficult to apply a waterproof housing for each manufacturer.

Meanwhile, in the present disclosure, it is easy to respond to various types of operating units by the first gear of the gear member, and by adjusting the number of teeth of the first gear and second gear, it is possible to easily set step adjustment of the operating unit.

In addition, in the present specification, the handle is driven by a clutch method. However, the handle may be formed in various forms such as a lever type handle, a slide type handle, and a button type handle, but is not limited thereto.

In this way, according to the present disclosure, the hydraulic device can be accommodated inside the upper housing and the lower housing to which the packing portion is fastened so that the hydraulic device can be safely operated underwater or in rain, and thus, an improved watertight structure is provided.

Moreover, according to the present disclosure, the packing portion including the main packing member and the ring-shaped packing member of the hydraulic device are integrally formed with each other, and the ring-shaped packing member having a relatively large cross-sectional area is provided so that airtightness is prevented from decreasing due to vibrations or the like generated when the hydraulic device is operated.

In addition, according to the present disclosure, the hatch portion is provided in the upper housing so that the battery of the hydraulic device can be easily replaced, and thus, the hydraulic device can be operated for a long time, and the battery can be replaced even underwater or in rain.

Effects of the present disclosure are not limited to the effects mentioned above, and other effects which are not mentioned will be clearly understood by a person skilled in the art from the following description.

Preferred embodiments are disclosed in the drawings and specification. Here, specific terms are used, but the terms are only used for the purpose of describing the present invention, and are not used to limit the meaning or the scope of the present invention described in the claims. Therefore, those of ordinary skill in the art will understand that various modifications and equivalent other embodiments are possible therefrom.

Accordingly, a true technical protection scope of the present invention will have to be determined by a technical idea of appended claims.

## Claims

1. A waterproof housing coupled to an outside of a hydraulic device 20 to which a battery 10 is detachable, the waterproof housing comprising:
a lower housing 100 which is formed to correspond to a lower-side outer shape of the hydraulic device and includes a plurality of lower fastening holes 110 formed along an outer periphery on an outer peripheral surface and a lower hole 120 formed on a front surface so that a tool member of the hydraulic device is seat on a lower portion;
an upper housing 200 which includes upper fastening holes 210 corresponding to the lower fastening holes of the lower housing to be coupled to the lower housing and an upper hole 220 formed on a front surface so that an upper portion of the tool member is seated; and
a packing portion 300 in which a main packing member 310 coupled to a lower recessed portion 130 and an upper recessed portion 230 formed on contact surfaces of the lower housing and the upper housing and a ring-shaped packing member 320 coupled to the lower hole and the upper hole are integrally formed with each other so as to control water-tightness inside the waterproof housing.

2. The waterproof housing of claim 1, wherein the packing portion is formed of a silicone rubber material.

3. The waterproof housing of claim 2, wherein in the packing portion, a cross-sectional area of the ring-shaped packing member is one to two times a cross-sectional area of the main packing member.

4. The waterproof housing of claim 1, wherein the upper housing further includes a hatch portion 240 formed in an upper portion so that the battery of the hydraulic device is replaceable, and
the hatch portion includes a protrusion frame 241 which protrudes upward from the upper housing and includes a hollow, a cover 242 which is coupled to an upper portion of the protrusion frame and is openable or closable, and an auxiliary packing member 244 which is fastened to an auxiliary recessed portion 243 formed on contact surfaces of the protrusion frame and the cover.

5. The waterproof housing of claim 1, wherein the upper housing further includes a hatch portion 240 formed in an upper portion so that the battery of the hydraulic device is replaceable, and
the hatch portion includes a connector portion 245 which is formed on an inner upper surface of the upper housing, is electrically connected to the hydraulic device accommodated inside the housing, and is formed to be exposed to an upper surface of the upper housing, a waterproof cover 247 which includes a power terminal 246 corresponding to the connector portion and accommodates the battery inside the waterproof cover, and a coupler 248 which is formed on one side of the upper surface of the upper housing so that the waterproof cover is fixed.

6. The waterproof housing of claim 1, wherein the lower housing and the upper housing include a gear member 400 for interlocking with an operating member of the hydraulic device therein,
the gear member includes a first gear 410 which is connected to an operating unit 21 of the hydraulic device, a second gear 420 which engages with the first gear to transmit a rotating force, and a rotating shaft 430 which is formed at a center of the second gear, and
the lower housing includes a through hole 140 through which the rotating shaft passes at one side of a rear surface to protrude outward and a handle 150 which is fastened to an end portion of the rotating shaft.
